(19) Europäisches Patentamt
European Patent Office
Office européen des brevets

(11) **EP 3 792 394 B1**

(12) **EUROPÄISCHE PATENTSCHRIFT**

(45) Veröffentlichungstag und Bekanntmachung des Hinweises auf die Patenterteilung:
**21.02.2024   Patentblatt 2024/08**

(21) Anmeldenummer: **20195425.2**

(22) Anmeldetag: **10.09.2020**

(51) Internationale Patentklassifikation (IPC):
***D21G 1/00*** *(2006.01)*       ***B29C 43/24*** *(2006.01)*
***D21G 1/02*** *(2006.01)*

(52) Gemeinsame Patentklassifikation (CPC):
**D21G 1/0226; B29C 43/24; D21G 1/0026; D21G 1/0033**

(54) **KALANDER**

CALENDAR

CALANDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2019   DE 102019124244**

(43) Veröffentlichungstag der Anmeldung:
**17.03.2021   Patentblatt 2021/11**

(73) Patentinhaber: **Andritz Küsters GmbH 47805 Krefeld (DE)**

(72) Erfinder:
• **BECKER, Sebastian 47800 Krefeld (DE)**
• **MEYER, Christian 41751 Viersen-Dülken (DE)**
• **HÜNNEKENS, Andre 47638 Straelen (DE)**

(74) Vertreter: **Kluin Patent Patentanwälte Kluin Debelius Weber PartG mbB Benrather Schlossallee 111 40597 Düsseldorf (DE)**

(56) Entgegenhaltungen:
**DE-A1- 3 306 549     DE-B1- 1 510 215**

Processed by Luminess, 75001 PARIS (FR)

**Beschreibung**

Die Erfindung betrifft einen Kalander zur Druckbehandlung einer Warenbahn, mit einem Kalandergestell, mit einer ersten Walze, die eine erste Walzenachse aufweist, mit einer zweiten Walze, die eine zweite Walzenachse aufweist, wobei die Walzen mit Lagereinrichtungen in dem Kalandergestell gelagert sind und in Positionen zueinander bringbar sind, in denen die ersten und zweiten Achsen parallel zueinander verlaufen und eine Wirkebene definieren, wobei zumindest eine der Lagereinrichtungen zumindest einer der Walzen derart ausgebildet ist, dass die eine Walze gegenüber den anderen Walze um eine die erste und die zweite Walzenachse senkrecht schneidende Verschränkachse um einen Verschränkwinkel verschränkbar ist.

Die auch als "X-Crossing" bezeichnete gegenseitige Verschränkung der Walzen, sodass ihre Achsen einen spitzen Winkel bilden, dient dazu, Durchbiegungen der Walzen zumindest teilweise zu kompensieren, die sich insbesondere aufgrund von Kräften, die während der Druckbehandlung auf die Walzen wirken, ergeben. Die Durchbiegung führt bei parallelstehenden Walzen regelmäßig dazu, dass die Höhe eines zwischen den Walzen gebildeten Walzenspalts etwa in der Mitte der Walzen größer ist als am Rand. Dementsprechend wäre die Dicke der Warenbahn in der Mitte größer als am Rand. Durch die Verschränkung der Walzen über eine senkrecht zu ihren Längsachsen verlaufende Hochachse, auch als Verschränkachse bezeichnet, werden die Walzen zu stirnseitigen Enden hin voneinander entfernt, sodass unter Belastung eine Vergleichmäßigung der Höhe des Walzenspalts über die Länge der Walzen erzielbar ist. Es lässt sich somit eine für viele Anwendungsfälle ausreichende Kompensation der Walzendurchbiegung bewirken. Die Verschränkachse kann senkrecht auf den Mittelpunkten der Längsachsen stehen.

Aus der DE 1 510 215 B1 ist die Anordnung eines Presswalzenpaares bekannt, bei der eine Verschränkung der Presswalzen zueinander mit einer Veränderung des Anpressdrucks zwischen den Walzen gekoppelt ist. Dazu ist eine der beiden Presswalzen an einer Wippe gelagert, welche über eine Exzentereinrichtung entsprechend verstellbar ist.

Von Nachteil ist, dass durch die Verschränkung der beiden Walzen zueinander und aufgrund der Ausgestaltungen beispielweise des Kalandergestells und der Lagereinrichtungen Querkräfte, die auch von dem im Walzenspalt herrschenden Druck abhängig sein können, auf die Lagereinrichtungen wirken können. Unter "Querkräften" sind Kraftkomponenten zu verstehen, die senkrecht zu den durch die Lagereinrichtungen definierten Achsen wirken. Diese Kräfte können verhindern, dass während einer Druckbehandlung der Winkel, um den die Walzen verschränkt sind, verändert werden kann. Es ist daher regelmäßig notwendig, den Behandlungsprozess zu unterbrechen, sollte sich herausstellen, dass eine Änderung des Verschränkungswinkels zur Erzielung des gewünschten Behandlungsergebnisses erforderlich ist.

Häufig sollen Kalander nicht nur "auf Druck", sondern auch "auf Spalt" gefahren werden können. Beim Fahren "auf Druck" wird der Druck, unter dem die beiden den Walzenspalt bildenden Walzen gegeneinander gedrückt werden, vorgegeben. Für den Fall, dass keine Warenbahn zugeführt wird, berühren sich die Walzen. Während der Behandlung einer Warenbahn stellt sich zwischen den beiden Walzen ein Walzenspalt mit einer Höhe ein, die von Eigenschaften der zugeführten Warenbahn abhängt, insbesondere von deren Verformbarkeit oder Viskosität. Beim Fahren "auf Spalt" wird eine gewünschte Höhe des Walzenspalts durch einen vorgewählten Abstand der beiden Walzen zueinander eingestellt. Dies kann beispielsweise geschehen, indem Anschlagmittel, die die Spalthöhe bestimmen, vorgesehen werden gegen die eine der Walzen angestellt wird. Erfolgt die Anstellung mittels hydraulischen oder pneumatischen Drucks, so kann sich der Walzenspalt erweitern, wenn die in ihm herrschende Kraft die Kraft, mit dem die Walze angestellt wird, übersteigt. Dies hat den Vorteil, dass aufgrund der Druckbehandlung zwischen den Walzen eine Warenbahn wohl definierter Dicke entsteht, gleichwohl ein Öffnen des Walzenspalts möglich ist, wie dies beispielsweise beim Durchlaufen von Fremdkörpern erforderlich ist, um eine Beschädigung der Walzen zu vermeiden.

Stellt sich während der Behandlung einer Warenbahn heraus, dass eine Änderung der Verschränkung der beiden Walzen erforderlich ist, so bereitet dies beim Fahren "auf Spalt" Probleme. Denn eine Änderung des Verschränkungswinkels geht regelmäßig einher mit einer Veränderung der Höhe des Walzenspaltes, die jedoch nur schwer rechnerisch und/oder durch die Positionierung der Anschlagsmittel erfassbar ist. Dies insbesondere, da im Betrieb durch Verformungen und/oder mechanisches Spiel Effekte auftreten können, die die Höhe des Walzenspalts im Betrieb beeinflussen, jedoch kaum zu erfassen sind.

Der Erfindung liegt die Aufgabe zugrunde, einen zumindest hinsichtlich eines der vorgenannten Nachteile verbesserten Kalander der eingangs beschriebenen Art zu schaffen.

Bei dem erfindungsgemäßen Kalander umfasst die mindestens eine Lageranordnung eine Schwinge mit einer Walzenlageraufnahme. Bei dem Walzenlager kann es sich insbesondere um ein Wälzlager handeln, welches einen Walzenzapfen in einem Lagerinnenring aufnimmt. Die Walzenlageraufnahme ist dann an den Außenring des Wälzlagers angepasst. Die Schwinge ist in einer Schwingenanordnung um eine Lagerachse mithilfe eines in einer Anstellrichtung wirkenden, einen maximalen Hub aufweisenden Längenverstellers schwenkbar und mit einer zur Walzenachse senkrechten Richtungskomponente relativ zum Kalandergestell mithilfe einer Verlagerungseinrichtung verlagerbar an dem Kalandergestell gelagert. Überraschenderweise hat sich gezeigt, dass durch diese Ausbildung des Kalanders die während der Druckbehandlung einer Warenbahn auf die Schwingenlageranordnung wirkenden Kräfte so gering sind, dass eine Veränderung des Verschränkungswinkels mithilfe der Verlagerungseinrichtung auch während einer Druckbehandlung möglich ist. Einerseits werden hierdurch Stillstandszeiten aufgrund einer Veränderung des Verschränkungswinkels vermieden. Andererseits ist es während der Druckbehandlung möglich, die Auswirkungen der Veränderung des Verschränkungswinkels direkt an der behandelten Warenbahn zu erfassen, wodurch eine optimale Anpassung des Verschränkungswinkels im Hinblick auf das gewünschte Behandlungsergebnis ermöglicht wird.

Die Walzenachse der mit der Walzenlageraufnahme gelagerten Walze weist zur Lagerachse einen ersten Abstand auf. Der Längenversteller ist vorzugsweise an einer Anlenkstelle an der Schwinge angelenkt, die von der Lagerachse einen zweiten Abstand aufweist. Vorzugsweise gilt dann für das Abstandsverhältnis zwischen dem ersten und dem zweiten Abstand 0,8 <= Abstandsverhältnis < = 1,2, bevorzugt 0,9 <= Abstandsverhältnis <= 1,1, besonders bevorzugt 0,95 <= Abstandsverhältnis <= 1,05.

Bei einer ebenfalls bevorzugten Ausführungsform des erfindungsgemäßen Kalanders beträgt die Abweichung der Anstellrichtung, unter der der Längenversteller auf die Schwinge wirkt, von der Richtung einer Achse, die die beiden Walzenachsen in deren Mitten schneidet maximal 30°, vorzugsweise maximal 20°, besonders bevorzugt maximal 10°. Es hat sich überraschenderweise gezeigt, dass die zur Verlagerung der Schwinge mithilfe der Verlagerungseinrichtung aufzubringenden Kräfte durch zumindest eine der obigen Maßnahmen besonders gering sind, wodurch die Verstellung des Verschränkungswinkels erleichtert und besonders feinfühlig möglich ist.

Besonders bevorzugt ist eine Ausgestaltung des erfindungsgemäßen Kalanders, bei welcher eine Einrichtung zur Begrenzung des Schwenkens der Schwinge in Anstellrichtung zur Vorgabe der Höhe des Walzenspalts vorgesehen ist. Aufgrund dieser Maßnahme ist es möglich, den erfindungsgemäßen Kalander "auf Spalt" zu fahren, wodurch die Dicke einer mithilfe des Kalanders druckbehandelten Warenbahn definiert vorgegeben werden kann. Vorzugsweise ist die Einrichtung zur Begrenzung des Schwenkens der Schwinge in einem Abstand von der Schwingenlagerachse an der Schwinge angelenkt. Dann gilt vorzugsweise für das Abstandsverhältnis zwischen diesem Abstand und dem zweiten Abstand 0,5 <= Abstandsverhältnis <= 1,5, besonders bevorzugt 0,75 <= Abstandsverhältnis < = 1,25. Aufgrund dieser Maßnahme sind die aufgrund des Begrenzens des Schwenkens der Schwinge auf die Schwingenlageranordnung wirkenden Kräfte auf ein Maß reduziert, dass die Betätigung der Verlagerungseinrichtung regelmäßig auch bei laufendem Betrieb erlaubt.

Bei einer besonders bevorzugten Ausführungsform weist der Längenversteller eine pneumatisch oder hydraulisch betätigte Kolben/Zylinderanordnung auf. Die Einrichtung zur Begrenzung des Schwenkens der Schwinge kann in beliebiger Weise ausgebildet sein, beispielsweise als Anschlag, an dem die Schwinge anschlägt und der eine Kraft in einer Wirkrichtung ausübt.

Um mit Hilfe des Anschlags die Höhe des Walzenspalts einstellen zu können, kann die Einrichtung in einer einfachen Ausführungsform ein austauschbares Distanzstück umfassen, das derart angeordnet und ausgebildet ist, dass seine Höhe die Höhe des Walzenspalts beeinflusst. Es können dann mehrere, verschiedene Distanzstücke unterschiedlicher Höhe vorgehalten und zur Anpassung der Höhe des Walzenspalts ausgetauscht werden.

Alternativ kann das Distanzstück auch derart ausgebildet sein, dass seine Höhe variabel ist. Hierzu kann das Distanzstück beispielsweise eine Mehrzahl von Keilen, insbesondere zwei oder drei Keile, die manuell oder motorisch, bspw. mit einer Spindel, gegeneinander verschiebbar sind, umfassen. Oder das Distanzstück umfasst bspw. zwei in Höhenrichtung relativ zueinander durch Drehung einer sich in Höhenrichtung erstreckenden Spindel verlagerbare Bauteile.

Zur Erhöhung der Genauigkeit, mit der die Keile oder die Bauteile relativ zueinander verlagerbar sind, kann die Spindel mit einem Differenzgewinde ausgebildet sein.

Die Spindel kann manuell oder motorisch drehbetätigbar ausgebildet sein. Die Einleitung eines Drehmoments zur Drehbetätigung kann auf jede beliebige Weise erfolgen, bspw. auch mit Hilfe eines Kettentriebs (Hülltrieb) oder auch mit Hilfe eines Schneckengetriebes. Im ersten Fall ist die Spindel bspw. mit einem Kettenrad, auf dem eine Kette umläuft, im zweiten Fall mit einem Schneckenrad, in welches eine Schnecke eingreift, verbunden. Auch kann die Spindel Teil eines Spindelhubgetriebes sein, bei dem die Spindel drehfest gelagert ist, und die Spindelmutter drehantreibbar ist.

Die Einrichtung zur Begrenzung des Schwenkens der Schwinge kann am Ständer oder der feststehenden Walze angeordnet sein, so dass der Anschlag im Betrieb des _Kalanders auf eine Anschlagfläche wirkt, die bspw. an der Schwinge, an der die bewegliche Walze vorgesehen ist, oder an einem Lager der beweglichen Walze angeordnet ist. Auch eine umgekehrte Anordnung der Einrichtung zur Begrenzung des Schwenkens an der Schwinge oder dem Lager und der Anordnung der Anschlagfläche an dem Ständer oder der feststehenden Walze ist möglich.

Der Anschlag und/oder die Anschlagfläche können etwa um eine mit einer Walzenachse parallel verlaufenden Drehachse gekrümmt und vorzugsweise drehbar ausgeführt sein. Hierdurch ist eine Reibung, die bei einer Veränderung des Verschränkungswinkels überwunden werden muss, wenn der Anschlag an der Anschlagfläche anliegt, reduziert.

Idealerweise ist die Einrichtung zur Begrenzung des Schwenkens der Schwinge derart ausgebildet, dass der Anschlag direkt auf die Achse der beiden Walzen wirkt, und um diese drehbar ist. In diesem Falle wäre die Einstellung der Höhe des Walzenspalts zumindest nahezu fehlerfrei und reibungsarm.

Besonders bevorzugt ist eine Ausführungsform der Einrichtung zur Begrenzung des Schwenkens der Schwinge, bei der die Kontaktfläche des Anschlags, die im Betrieb des Kalanders an der Anschlagfläche anliegt, sowie die Anschlagfläche derart gekrümmt ausgebildet sind, dass sich bei einer Veränderung des Verschränkwinkels die Höhe des Walzenspalts nur möglichst geringfügig ändert. Idealerweise gilt

$$R1+R2 = \text{Summe der Radien der den Walzenspalt begrenzenden Walzen + Höhe des Walzenspalts,}$$

wobei R1= Krümmungsradius der Kontaktfläche des Anschlags um die Achse der ersten Walze

R2= Krümmungsradius der Anschlagfläche um die Achse der zweiten Walze

Da in der Praxis die Höhe des Walzenspalts variabel ist und die vorstehende Vorgabe nicht exakt eingehalten werden kann, hat sich überraschend gezeigt, dass Krümmungen R1, R2 besonders geeignet sind, für die gilt:

$$R1+R2 = \text{Summe der Radien der den Walzenspalt begrenzenden Walzen +/- 25\%, vorzugsweise +/- 10\%.}$$

Dabei weicht der Bogenmittelpunkt der Fläche des Anschlags und der Anschlagfläche nicht mehr als 20% den Walzenradien von der Walzendrehachsen ab.

Insbesondere kann die Einrichtung ein einenends an dem Kalandergestell und anderenends an der Schwinge an einer Anlenkstelle angelenktes, durch die Wirkung der Kolbenzylinderanordnung auf Zug belastetes Spindelhubgetriebe aufweisen. Aufgrund dieser Maßnahme ist die Höhe des Walzenspaltes mithilfe des Spindelhubbetriebes auf einfache Weise einstellbar. Da das Spindelhubgetriebe lediglich in der Wirkrichtung auf Zug belastet wird und der Längenversteller eine pneumatisch oder hydraulisch betätigte Kolben/Zylinderanordnung aufweist, kann sich der Walzenspalt öffnen, wenn die in ihm wirkende Kraft die aufgrund der Wirkung des Längenverstellers in dem Walzenspalt wirkende Kraft übersteigt. Durch eine bevorzugt schwenkbare Anlenkung des Spindelhubgetriebes an dem Kalandergestell und an der Schwinge wird eine Veränderung des Verschränkwinkels nicht behindert.

Für den Winkel zwischen der Anstellrichtung und der Wirkrichtung gilt - unabhängig von der konkreten Ausbildung der Einrichtung zur Begrenzung des Schwenkens der Schwinge - vorzugsweise 0° <= Winkel <= 30°, vorzugsweise < = 20°, besonders bevorzugt <= 10°.

Bei einer weiteren, besonders bevorzugten Ausführungsform sind Mittel zur Einstellung des maximalen Hubs des Längenverstellers vorgesehen, um den Kalander "auf Spalt" fahren zu können. Das vorgenannte Abstandsverhältnis beträgt dann 1, wodurch die aufgrund der Abstandsbegrenzung auf die Schwinge wirkenden Kräfte minimiert sind. Umfasst der Längenversteller eine Kolben/Zylinderanordnung, so umfassen die Mittel zur Einstellung des maximalen Hubes vorzugsweise einen den maximalen Hub des Kolbens begrenzenden Anschlag.

Bei einer besonders bevorzugten Weiterbildung des erfindungsgemäßen Kalanders umfasst dieser eine Einrichtung zur Erfassung der Höhe des Walzenspalts. Diese Weiterbildung ist gegenüber Kalandern, bei denen beispielsweise aus der durch das Spindelhubgetriebe vorgegebenen Walzenposition auf die Höhe des Walzenspalts geschlossen wird, von besonderem Vorteil, da eine Veränderung des Verschränkwinkels regelmäßig mit einer Veränderung der Höhe des Walzenspalts einhergeht, die jedoch bei lediglich der Berücksichtigung der Walzenposition aufgrund der Stellung des Spindelhubgetriebes unberücksichtigt bleibt.

Die Einrichtung zur Erfassung der Höhe des Walzenspalts umfasst vorzugsweise eine Abstandsmesseinrichtung, mittels welcher der Abstand zwischen der ersten und der zweiten Walzenachse gemessen werden kann. Die Abstandsmesseinrichtung weist hierzu vorzugsweise einen induktiven Wegaufnehmer auf, der sich zwischen der ersten und der zweiten Walzenachse erstreckt und der den Abstand beispielsweise induktiv, optisch, beispielsweise unter Verwendung eines Lasers, oder akustisch, insbesondere unter Verwendung von Ultraschall erfasst.

Um die Gefahr von Fehlmessungen zu reduzieren umfasst die Abstandsmesseinrichtung vorzugsweise eine Führungseinrichtung, mittels welcher ein Verkippen der Abstandsmesseinrichtung aus einer die Walzenachsen verbindenden Richtung verhindert wird. Hierzu kann die Führungseinrichtung - wie bevorzugt - über Lageranordnungen der ersten und der zweiten Walze geführt wird.

Die Verlagerungseinrichtung, mit welcher die Schwinge mit einer zu dem Walzenachsen senkrechten Richtungskomponente relativ zum Kalandergestell verlagerbar ist, umfasst vorzugsweise eine Exzenterverstelleinrichtung. Eine Änderung des Verschränkwinkels ist dann durch einfache Drehbetätigung der Exzenterverstelleinrichtung möglich.

Die Exzenterverstelleinrichtung selbst umfasst vorzugsweise ein Exzenterbauteil, welches etwa parallel zur ersten oder zweiten Walzenachse rotierbar in dem Walzengestell und in der Schwinge gelagert ist und welches beim Erreichen eines gewünschten Verstellwinkels fixierbar ist.

Bei einem besonders bevorzugten, erfindungsgemäßen Kalander begrenzen Walzen den Walzenspalt, deren Oberfläche eine Länge parallel zur jeweiligen Walzenachse zwischen 0,5 m bis 10 m, vorzugsweise zwischen 4 m und 8 m, und deren Walzendurchmesser zwischen 22 mm und 1.200 mm, vorzugsweise zwischen 400 mm und 1.000 mm betragen. Dieser bevorzugte Kalander ist vorzugsweise für Linienkräfte im Walzenspalt zwischen 10 N/mm und 150 N/mm, für Höhen des Walzenspalts von 0 bis 100 mm, und für Verschränkungswinkel , die einen Versatz des Ende der Walzenachsen von bis zu +- 100 mm ermöglichen, vorgesehen.

In der Zeichnung sind - rein schematisch - Ausführungsbeispiele des erfindungsgemäßen Kalanders dargestellt. Es zeigen:

Fig. 1    ein erstes Ausführungsbeispiel des erfindungsgemäßen Kalanders in einer Ansicht quer zu den Walzenachsen (Ansicht I in Fig. 2);

Fig. 2    dasselbe Ausführungsbeispiel in Richtung der Walzenachsen (Ansicht II in Fig. 2) bei einem Verschränkwinkel von 0°;

Fig. 3    eine Fig. 2 entsprechende Darstellung desselben Ausführungsbeispiels mit um einen ersten Verschränkwinkel verschränkten Walzen;

Fig. 4    eine Fig. 2 und 3 entsprechende Ansicht derselben Ausführungsbeispiels bei einem um einen zweiten Verschränkwinkel verschränkten Walzen;

Fig. 5    eine Darstellung nur der Walzen desselben Ausführungsbeispiels in einer Ansicht gemäß Fig. 1 von oben (Ansicht IV in Fig. 1)

Fig. 6    eine Ausschnittsdarstellung der unteren Walze mit einer zugehörigen Lagereinrichtung in Achsrichtung der Walze;

Fig. 7    ein zweites Ausführungsbeispiel eines erfindungsgemäßen Kalanders in einer Fig. 2 entsprechenden Ansicht, wobei die beiden Walzen nicht verschränkt sind;

Fig. 8    dasselbe Ausführungsbeispiel in einer Fig. 7 entsprechenden Ansicht, wobei die beiden Walzen gegeneinander verschränkt sind;

Fig. 9    ein weiteres Beispiel eines erfindungsgemäßen Kalanders in einer Fig. 8 entsprechenden Darstellung;

Fig. 10   ein weiteres Ausführungsbeispiel des Kalanders in einer Fig. 9 entsprechenden Darstellung, sowie

Fig. 11   ein weiteres Ausführungsbeispiel des Kalanders in einer Fig. 10 entsprechenden Darstellung.

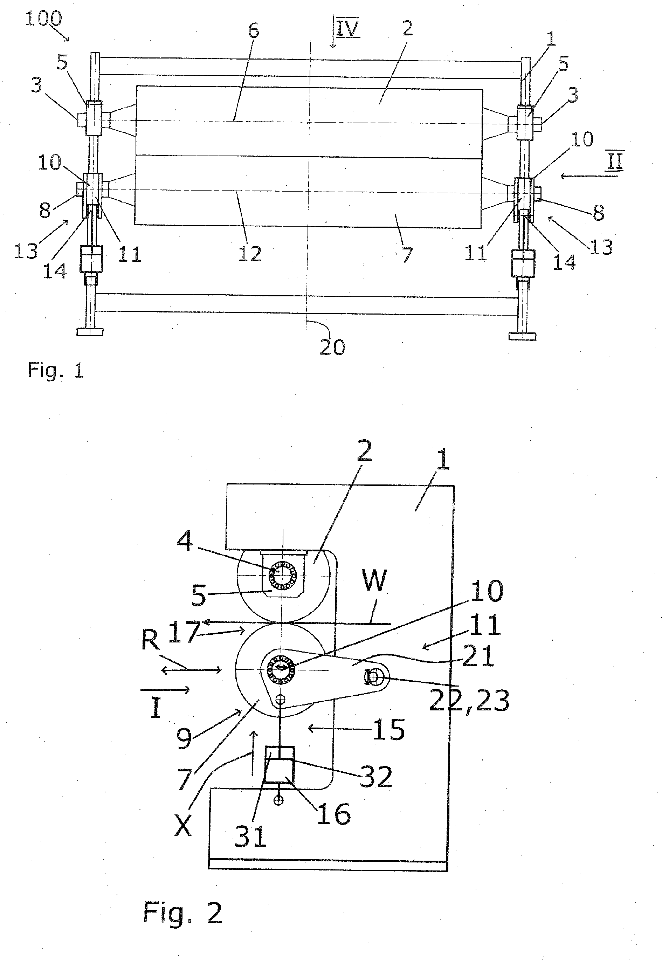

Das in den Fig. 1 bis 5 dargestellte Ausführungsbeispiel eines erfindungsgemäßen Kalanders (Kalander 100) dient der Druckbehandlung einer Warenbahn W. Der Kalander 100 umfasst ein Kalandergestell 1. Der Kalander 100 umfasst darüber hinaus eine erste Walze 2, die aneinander gegenüberliegenden Stirnseiten Walzenzapfen 3 aufweist. Sie sind in Lageranordnungen 4 gelagert, die von fest mit dem Kalandergestell 1 verbundenen Lageraufnahmen 5 aufgenommen sind. Die erste Walze 2 ist gegenüber dem Kalandergestell 1 feststehend, jedoch um ihre erste Walzenachse 6 rotierbar gelagert.

Der Kalander 100 umfasst darüber hinaus eine zweite Walze 7. Sie weist wiederum an ihren Längsenden Walzenzapfen 8 auf, die in Lageranordnungen 9 gelagert sind. Letztere sind von Walzenlageraufnahmen 10 aufgenommen, die ihrerseits jeweils in einer Schwinge 11 vorgesehen sind. Die zweite Walze 7 ist um eine zweite Walzenachse 12 drehbar gelagert.

Jede Schwinge 11 ist mithilfe jeweils einer Schwingenlageranordnung 13 um eine Schwingenlagerachse 14, die parallel zur zweiten Walzenachse 12 verläuft, verschwenkbar an dem Kalandergestell 1 gelagert. Durch Schwenken der Schwingen 11 um die Schwingenlagerachsen 14 kann die zweite Walze 7 somit in einer Anstellrichtung X an die erste Walze 2 angestellt oder von dieser fortverlagert werden.

Zum Schwenken der Schwingen 11 um die Schwingenlagerachsen 14 ist für jede Schwinge 11 ein in der Anstellrichtung wirkender Längenversteller 15 vorgesehen, der eine Kolben/Zylinderanordnung 16 umfasst. Sie kann pneumatisch oder hydraulisch betreibbar ausgebildet sein. Durch Variation des Drucks, mit dem die Kolben/Zylinderanordnung 16 beaufschlagt wird, lässt sich die auf die Warenbahn W in einem zwischen der ersten und der zweiten Walze 2, 7 gebildeten Walzenspalt 17 wirkende Linienkraft einstellen. Bei dem in Fig. 2 dargestellten Fahren "auf Druck" wird sich eine Höhe des Walzenspalts einstellen, die von dem Materialeigenschaften der Warenbahn W abhängt und sich durch ein Gleichgewicht im Walzenspalt 17 der durch die Kolbenzylinderanordnung 16 erzeugten Kraft und der durch die Warenbahn entgegengerichteten Reaktionskräfte einstellt.

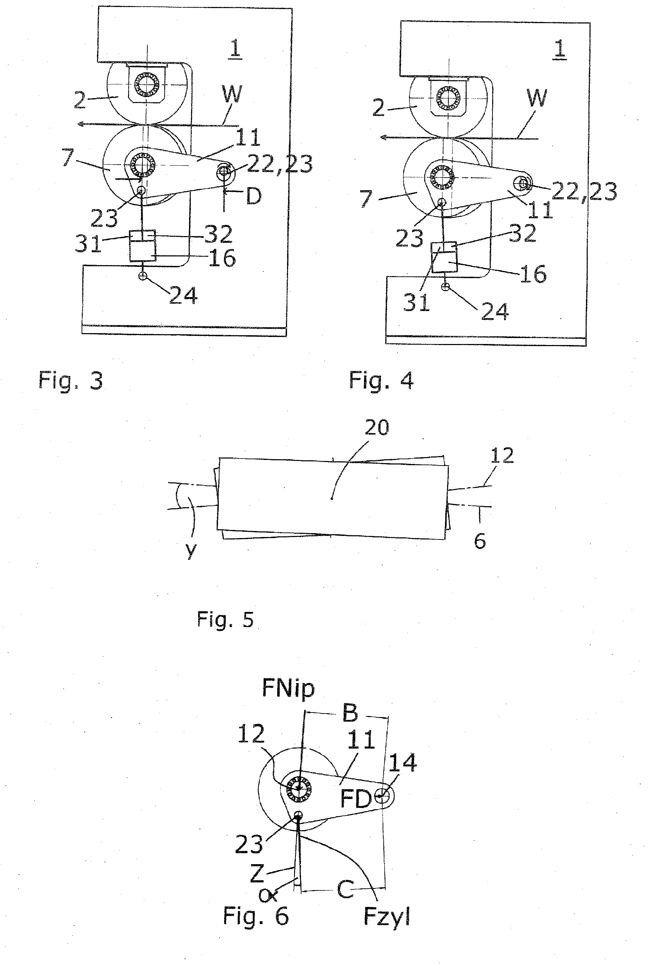

Um ein Durchbiegen der ersten und/oder zweiten Walze insbesondere aufgrund der im Walzenspalt 17 wirkenden Kräfte zumindest teilweise zu kompensieren, können die ersten und zweiten Walzen 2, 7 um eine Verschränkachse 20, einen Verschränkwinkel $\gamma$, die die erste und die zweite Walzenachse 6, 12 senkrecht schneidet, verschränkt werden. Hierzu ist jede Schwingenlageranordnung 13 mit einer Verlagerungseinrichtung 21 ausgestattet, mit welcher die jeweilige Schwinge mit einer zur zweiten Walzenachse 12 senkrechten Richtungskomponente R relativ zum Kalandergestell 1 verlagerbar ist. Die Verlagerung der beiden Schwingen 11 erfolgt im Regelfall gegensinnig, sodass die Verschränkachse 20 die ersten und zweiten Walzenachsen 2, 12 zumindest annähernd in der Mitte der Längserstreckung der beiden Walzen schneidet, wie in Fig. 1 und 5 dargestellt.

Bei den in der Zeichnung dargestellten Ausführungsbeispielen umfassen die Verlagerungseinrichtungen 21 stets Exzenterverstelleinrichtungen 22, die jeweils ein Exzenterbauteil 23 umfassen, welches um eine etwa parallel zur zweiten Walzenachse 12 liegende Achse rotierbar an dem Walzengestell 1 und in der Schwinge 11 gelagert und in einer gewünschten Winkelstellung fixierbar ist.

Wie in Fig. 6 erkennbar ist, weist die zweite Walzenachse 12 zu der Schwingenlagerachse 14 einen ersten Abstand B auf. Der Längenversteller 15 ist an einer Anlenkstelle 23 an der Schwinge 11 angelenkt, die von der Schwingenlagerachse 14 einen zweiten Abstand C aufweist. Das Abstandsverhältnis B zu C beträgt bei dem dargestellten Ausführungsbeispiel 1, d. h. die zweite Walzenachse 12 und die Anlenkstelle 23 liegen auf einem Kreisbogen um die Schwingenlagerachse 14. Anderenends ist der Längenversteller 15 an einer Anlenkstelle 24 an dem Kalandergestell 1 angelenkt, deren Position so gewählt ist, dass der Winkel $\alpha$ zwischen der im Walzenspalt 17 wirkenden Kraft F Nip und der durch den Längenversteller 15 in die Schwinge 11 eingeleiteten Kraft Fzyl bei einem Verschränkwinkel $\gamma = 0$ zwischen der ersten und der zweiten Walze 2, 7 möglichst klein ist und bei einem maximalen Verschränkwinkel $\gamma$ um die Verschränkachse 20 (in Fig. 4 dargestellt) 10° nicht übersteigt. Dies wird bewirkt, indem der Winkel $\alpha$ zwischen einer die beiden Walzenachsen 6, 12 in deren Mitten verbindenden Achse Z und der Anstellrichtung X der Kraft Fzyl ebenfalls 10° nicht übersteigt. Eine auf die Exzenterverstelleinrichtung 22 wirkende Kraft FD, die eine Verstellbetätigung während des laufenden Betriebes erschweren oder verhinderen würde, wird aufgrund dieser Maßnahme reduziert.

Mit dem in Fig. 1 bis 5 dargestellten Kalander ist es auch möglich, "auf Spalt" zu fahren, d. h. eine minimale Spalthöhe H des Bearbeitungsspalts vorzugeben, die selbst dann nicht unterschritten wird, wenn in dem Walzenspalt 17 keine oder nur geringe Linienkräfte wirken, da ein Mittel zur Einstellung des maximalen Hubes H des Längenverstellers 15 in Form eines Anschlags 31 für einen Kolben 32 der Kolben/Zylinderanordnung 16 vorgesehen ist.

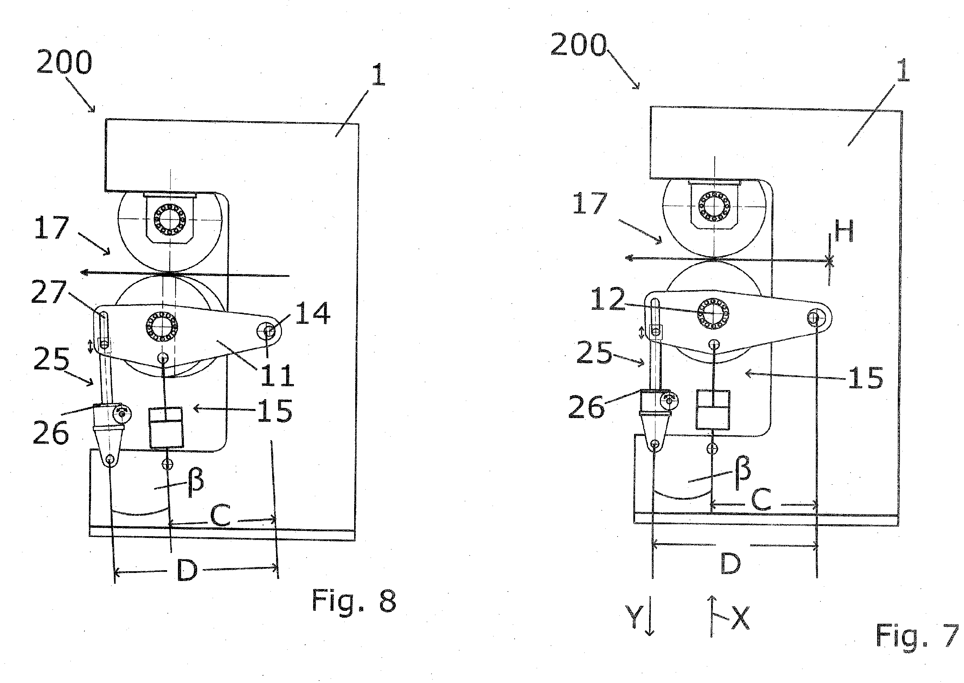

Um dies bei dem in Fig. 7 und 8 dargestellten, zweiten Ausführungsbeispiel eines erfindungsgemäßen Kalanders (Kalander 200) zu erreichen, ist bei dem Kalander 200 für jede der Schwingen 11 eine Einrichtung 25 zur Begrenzung des Schwenkens der Schwinge 11 um die Schwingenlagerachse 14 vorgesehen, welche bei dem dargestellten Ausführungsbeispiel ein in Zugrichtung Y auf Zug belastetes Spindelhubgetriebe 26 umfasst. Die Einrichtung 25 ist einenends an einer schlitzförmigen Führung 27 einer Schwinge 11 in einem Abstand D zur Schwingenlagerachse 14 angelenkt, der größer als der Abstand B zwischen der Schwingenlagerachse 14 und der zweiten Walzenachse 12 ist. Hierzu ist die Schwinge 11 des Kalanders 200 gegenüber der Schwinge 11 des Kalanders 100 verlängert. Anderenends ist die Einrichtung 25 an dem Kalandergestell angelenkt. Der Winkel $\beta$ zwischen der Anstellrichtung X und der Zugrichtung Y beträgt bei diesem Ausführungsbeispiel etwa 0°.

Wie in den Figuren 7 und 8 sinnfällig wird, erlaubt es die Führung 27, dass die jeweilige Schwinge unter Überwindung der durch den Längenversteller 15 eingeleiteten Kraft unter Vergrößerung der Spaltbreite H verschwenkt wird, sodass ein Öffnen des Walzenspaltes 17 beispielsweise beim Durchlaufen von Fremdkörpern möglich ist.

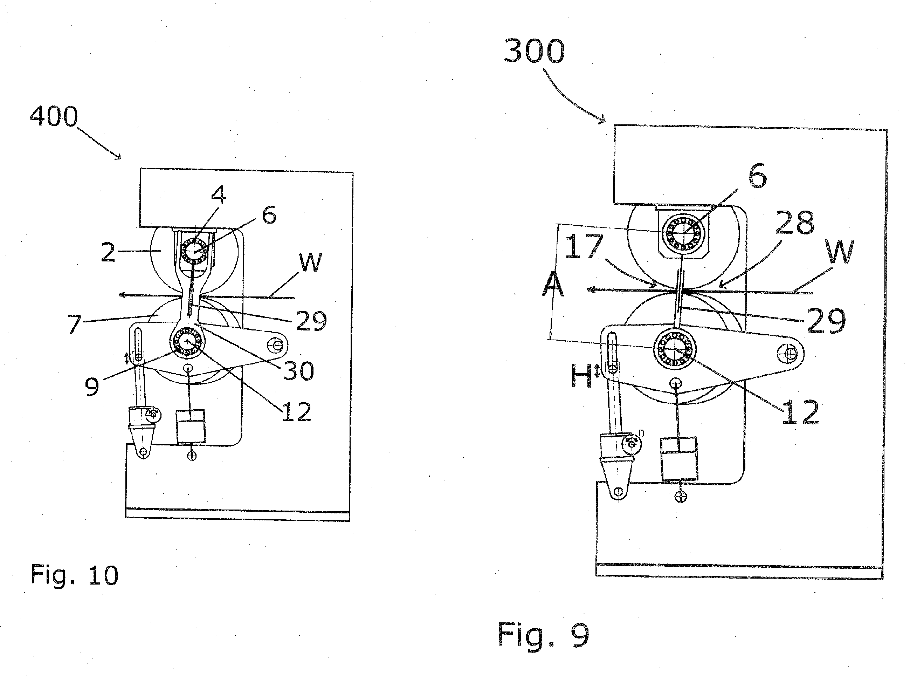

In nochmaligem Unterschied zu dem in Fig. 7 und 8 dargestellten Kalander 200 umfasst das in Fig. 9 dargestellte, weitere Ausführungsbeispiel (Kalander 300) eine Einrichtung 28 zur Erfassung der Höhe H des Walzenspalts 17. Diese Einrichtung weist eine Abstandsmesseinrichtung 29 auf, die an den Lageraufnahmen 5 und 10 angelenkt ist und mit der somit der Abstand A der ersten und zweiten Walzenachsen bestimmbar ist. Unter Berücksichtigung der Durchmesser der ersten und der zweiten Walze 2, 7 ist die Höhe H des Walzenspalts direkt ermittelbar. Da der Abstand der ersten und der zweiten Walzenachse 6, 12 gemessen wird, werden bei dieser Messung Einflüsse des Verschränkens auf die Höhe des Walzenspalts 17 miterfasst.

Bei dem in Fig. 10 dargestellten, weiteren Ausführungsbeispiel des erfindungsgemäßen Kalanders (Kalander 400) umfasst die Abstandsmesseinrichtung 29 eine Führungseinrichtung 30, mittels welcher ein Verkippen der Abstandsmesseinrichtung 29 aus einer zu den Walzenachsen 2, 12 senkrechten Richtung verhindert wird, in dem die Führungseinrichtung 30 über die Lageranordnungen 4, 9 der ersten und zweiten Walzen 2, 7 geführt wird.

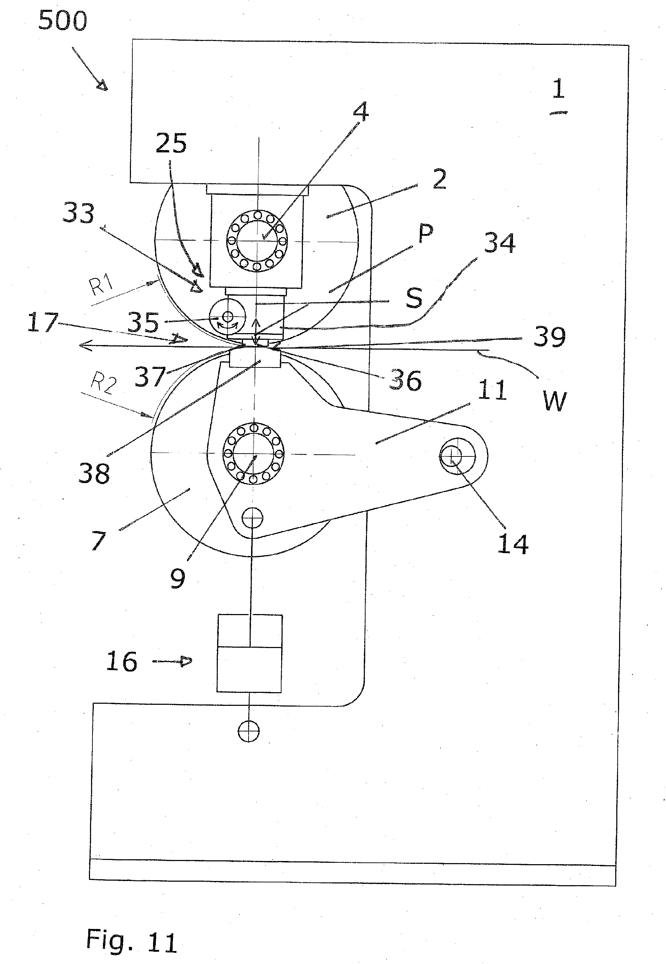

In Fig. 11 ist ein weiteres Ausführungsbeispiel des erfindungsgemäßen Kalanders (Kalander 500) dargestellt. Bei diesem Kalander 500 ist die Einrichtung 25 zur Begrenzung des Schwenkens der Schwinge 11 um die Schwingenlagerachse 14 zur Vorgabe einer minimalen Höhe H des Walzenspalts 17 zwischen der Lageranordnung 4 der ersten Walze 2 und der Lageranordnung 9 der zweiten Walze 7 angeordnet. Die Einrichtung ist als Spindelhubgetriebe 33 ausgebildet. Es umfasst ein Gehäuse 34, welches an der Lageranordnung 4 befestigt ist. In dem Gehäuse 34 ist eine in der Fig. 11 nicht erkennbare Spindelmutter um eine Spindelachse S drehbar, aber in Richtung der Spindelachse S feststehend gelagert. Die Spindelmutter ist als Schneckenrad ausgebildet, in das eine Schnecke eines Antriebs 35 eingreift.

Das Spindelhubgetriebe 33 umfasst des Weiteren eine sich mit der Spindelmutter in Eingriff befindliche, nicht um die Spindelachse S drehbare, jedoch in deren Richtung verlagerbare Spindel 36 mit einer Stirnfläche, die als Anschlag 37 ausgebildet ist.

Durch Drehbestätigung der Spindelmutter mit Hilfe des Antriebs 35 kann der Anschlag 37 in Richtung des Pfeils P verlagert werden.

An der Schwinge 11 ist ein Gegenanschlag 38 mit einer Anschlagfläche 39 angeordnet, die bei mit Hilfe der Kolben/Zylinderanordnung 16 in Betriebsstellung geschwenkter Schwinge 11 an dem Anschlag 37 anliegt, wodurch die Höhe H des Walzenspalts 17 vorgegeben ist.

Um die Auswirkungen der Verschränkung auf die Höhe H des Walzenspalts zu reduzieren, sind die Kontaktfläche des Anschlags 37 und die Anschlagfläche 39 mit Krümmungsradien R1 und R2 bezogen auf die Achse der ersten Walze 2 und die Achse der zweiten Walze 7 gekrümmt ausgebildet.

Für die Krümmungsradien R1 und R2 gilt idealerweise:

R1+R2= Summe der Radien der dem Walzenspalt begrenzenden Walzen 2, 7 + Höhe H des Walzenspalts 17.

**Bezugszeichenliste:**

| | |
|---|---|
| 100, 200, 300, 400 | Kalander |
| 1 | Kalandergestell |
| 2 | erste Walze |
| 3 | Walzenzapfen |
| 4 | Lageranordnungen |
| 5 | Lageraufnahmen |
| 6 | erste Walzenachse |
| 7 | zweite Walze |
| 8 | Walzenzapfen |
| 9 | Lageranordnungen |
| 10 | Walzenlageraufnahmen |
| 11 | Schwinge |
| 12 | zweite Walzenachse |
| 13 | Schwingenlageranordnung |
| 14 | Schwingenlagerachse |
| 15 | Längenversteller |
| 16 | Kolben/Zylinderanordnung |
| 17 | Walzenspalt |
| 20 | Verschränkachse |
| 21 | Verlagerungseinrichtung |
| 22 | Exzenteranordnung |
| 23 | Exzenteranordnung |
| 24 | Anlenkstelle |
| 25 | Einrichtung |
| 26 | Spindelhubgetriebe |
| 27 | Führung |
| 28 | Einrichtung |
| 29 | Abstandsmesseinrichtung |
| 30 | Führungseinrichtung |
| 31 | Anschlag |
| 32 | Kolben |
| 33 | Spindelhubgetriebe |
| 34 | Gehäuse |
| 35 | Antrieb |
| 36 | Spindel |

| 37 | Anschlag |
| 38 | Gegenanschlag |
| 39 | Anschlagsflächen |

| $\alpha$, $\beta$, $\gamma$ | Winkel |
| A, B, C, D | Abstände |
| F | Kräfte |
| H | Höhe |
| P | Pfeil |
| R | Richtungskomponente |
| S | Spindelachse |
| W | Warenbahn |
| X | Austellrichtung |
| Y | Wirkrichtung |
| Z | Achse |
| R1 | Krümmungsradius Kontaktfläche Anschlag |
| R2 | Krümmungsradius Anschlagfläche |

**Patentansprüche**

1.  Kalander (100, 200, 300, 400, 500) zur Druckbehandlung einer Warenbahn (W),

    mit einem Kalandergestell (1),
    mit einer ersten Walze (2), die eine erste Walzenachse (6) aufweist,
    mit einer zweiten Walze (7), die eine zweite Walzenachse (12) aufweist,
    wobei die Walzen (2, 7) mit Lageranordnungen (4, 9) in dem Kalandergestell gelagert sind und in Positionen zueinander bringbar sind, in denen die ersten und zweiten Walzenachsen (6, 12) parallel zueinander verlaufen, und wobei zumindest eine der Lageranordnungen (4, 9) zumindest einer der Walzen (2, 7) derart ausgebildet ist, dass eine der Walzen (2, 7) gegenüber der anderen der Walzen (2, 7) um eine die erste und die zweite Walzenachse (6, 12) senkrecht schneidende Verschränkachse (20) um einen Verschränkwinkel ($\gamma$) verschränkbar ist,
    **dadurch gekennzeichnet,**
    **dass** die mindestens eine Lageranordnung eine Schwinge (11) mit einer Walzenlageraufnahme (10) umfasst, und
    **dass** die Schwinge in einer Schwingenlageranordnung (13) um eine Schwingenlagerachse (14) mithilfe eines in einer Anstellrichtung (X) wirkenden, einen maximalen Hub (H) aufweisenden Längenversteller (15) schwenkbar und mit einer zur Walzenachse (12) senkrechten Richtungskomponente (R) relativ zum Kalandergestell (1) mithilfe einer Verlagerungseinrichtung (21) verlagerbar an dem Kalandergestell (1) gelagert ist.

2.  Kalander nach Anspruch 1, **dadurch gekennzeichnet, dass** die Walzenachse (12) der mit der Walzenlageraufnahme (10) gelagerten Walze (7) zu der Schwingenlagerachse (14) einen ersten Abstand (B) und der Längenversteller (15) an einer Anlenkstelle (23) an der Schwinge (11) angelenkt ist, die von der Schwingenlagerachse (14) einen zweiten Abstand (C) aufweist, wobei für das Abstandsverhältnis B/C gilt: 0,8 <= B/C <= 1,2 bevorzugt 0,9 <=B/C <= 1,1, besonders bevorzugt 0,95 <= B/C <= 1,05,.

3.  Kalander nach Anspruch 1 oder 2, **dadurch gekennzeichnet, dass** die Anstellrichtung von der Richtung einer Achse (Z), die die beiden Walzenachsen (6, 12) in deren Mitten senkrecht schneidet, um maximal 30°, vorzugsweise maximal 20°, besonders bevorzugt maximal 10° abweicht.

4.  Kalander nach einem der Ansprüche 1 bis 3, **dadurch gekennzeichnet, dass** eine Einrichtung (25) zur Begrenzung des Schwenkens der Schwinge (11) um die Schwingenlagerachse (14) zur Vorgabe einer minimalen Höhe (H) des Walzenspalts (14) vorgesehen ist.

5.  Kalander nach den Ansprüchen 2 und 4, **dadurch gekennzeichnet, dass** die Einrichtung (25) auf die Schwinge (11) unter einer Wirkrichtung in einem Abstand (D) von der Schwingenlagerachse (14) wirkt, wobei vorzugsweise für das Verhältnis zwischen dem Abstand (D) und dem zweiten Abstand (C) gilt: 0,5 <= D/C <= 1,5, bevorzugt 0,75 <= D/C <= 1,25 und vorzugsweise für einen Winkel ($\beta$) zwischen der Anstellrichtung (X) und der Wirkrichtung (Y) gilt: 0° <= β < = 30°, vorzugsweise <= 20°, besonders bevorzugt <= 10°.

6. Kalander nach einem der Ansprüche 1 bis 5, **dadurch gekennzeichnet, dass** der Längenversteller (15) eine pneumatisch und/oder hydraulisch betätigbare Kolbenzylinderanordnung (16) aufweist.

7. Kalander nach einem der Ansprüche 4 bis 6, **dadurch gekennzeichnet, dass** die Einrichtung (25) ein Spindelhubgetriebe (26) umfasst, welches einenends an dem Kalandergestell (1) und anderenends an der Schwinge (11) angelenkt ist und durch die Wirkung der Kolben/Zylinderanordnung auf Zug belastet wird.

8. Kalander nach einem der Ansprüche 4 bis 6, **dadurch gekennzeichnet, dass** die Einrichtung (25) Mittel zur Einstellung des maximalen Hubes (H) des Längenverstellers (15) umfasst.

9. Kalander nach Anspruch 6 und 8, **dadurch gekennzeichnet, dass** die Mittel einen den maximalen Hub des Kolbens (32) der Kolben/Zylinderanordnung (16) begrenzenden Anschlag (31) umfassen.

10. Kalander nach einem der Ansprüche 1 bis 9, **dadurch gekennzeichnet, dass** eine Einrichtung zur Erfassung der Höhe (H) des Walzenspalts (17) vorgesehen ist die vorzugsweise eine Abstandmesseinrichtung (29) umfasst, mittels welcher der Abstand der ersten und der zweiten Walzenachse (6, 12) messbar ist, wobei die Abstandsmesseinrichtung (29) einen vorzugsweise induktiven, optischen oder akustischen Wegaufnehmer umfasst.

11. Kalander nach Anspruch 10 oder 11, **dadurch gekennzeichnet, dass** die Abstandsmesseinrichtung (29) eine Führungseinrichtung (30) umfasst, mittels welcher ein Verkippen der Abstandsmesseinrichtung (29) aus einer zu den Walzenachsen (6, 12) senkrechten Richtung verhindert wird, wobei die Führungseinrichtung (30) vorzugsweise über Lageranordnungen (4, 9) der ersten und der zweiten Walze (2, 7) geführt ist.

12. Kalander nach einem der Ansprüche 1 bis 11, **dadurch gekennzeichnet, dass** die Verlagerungseinrichtung (21) eine Exzenteranordnung (22) umfasst, die vorzugsweise ein Exzenterbauteil (23) umfasst, welches um eine etwa parallel zur ersten oder zweiten Walzenachse (6, 12) liegende Achse rotierbar in dem Walzengestell (1) oder der Schwinge (11) gelagert und in einer Winkelstellung fixierbar ist.

13. Kalander nach einem der Ansprüche 4 bis 6, **dadurch gekennzeichnet, dass** die Einrichtung (25) zur Begrenzung des Schwenkens der Schwinge (11) um die Schwingenlagerachse (14) zwischen der Lageranordnung (4) der ersten Walze (2) und der Lageranordnung (9) der zweiten Walze (7) angeordnet ist und einen die minimale Höhe (H) des Walzenspalts (17) durch Anlage an einer Anschlagfläche (39) begrenzenden Anschlag (37) aufweist.

14. Kalander nach Anspruch 13, **dadurch gekennzeichnet, dass** der Anschlag (37) von einer Spindel (36) eines Spindelhubgetriebes (33) gebildet ist.

15. Kalander nach Anspruch 13 oder 14, **dadurch gekennzeichnet, dass** der Anschlag (37) eine Kontaktfläche aufweist, die um einen Radius (R1) gleichsinnig zur Oberfläche einer der ersten und zweiten Walzen (2, 7) gekrümmt ist, und die Anschlagfläche (39) um einen Radius (R2) gleichsinnig zur Oberfläche der anderen der ersten und zweiten Walze (2, 7) gekrümmt ist, wobei vorzugsweise für die Radien R1 und R2 gilt:

R1+R2= Summe des Radius der ersten und zweiten Walzen (2, 7) +/- 25% vorzugsweise +/- 10%.

**Claims**

1. Calender (100, 200, 300, 400, 500) for pressing a web of material (W), comprising a calender frame (1),

   comprising a first roller (2) having a first roller axis (6),
   comprising a second roller (7) having a second roller axis (12), wherein the rollers (2,7) are mounted in the calender frame with bearing assemblies (4, 9) and can be positioned to each other such that the first and second roller axes (6, 12) run in parallel to each other, and wherein at least one of the bearing assemblies (4, 9) of at least one of the rollers (2,7) is formed such that one of the rollers (2,7) with respect to the other of the rollers (2,7) can be interlocked by an interlocking angle (Y) around an interlocking axis (20) perpendicularly intersecting the first and second roller axis (6, 12),

**characterized in**

**that** the at least one bearing assembly comprises a rocker (11) with a roller bearing seat (10), and

**that** the rocker is mounted in a rocker bearing arrangement (13) so as to be pivotable about a rocker bearing axis (14) with the aid of a length adjuster (15) acting in an adjusting direction (X) and having a maximum stroke (H), and so as to be displaceable relative to the calender frame (1) with a directional component (R) perpendicular to the roller axis (12) with the aid of a displacement device (21).

2. Calender according to patent claim 1, **characterized in that** the roller axis (12) of the roller (7) mounted with the roller bearing seat (10) has a first distance (B) from the rocker bearing axis (14) and the length adjuster (15) is articulated to an articulating point (23) on the rocker (11), which has a second distance (C) from the rocker bearing axis (14), wherein the following applies to the distance ratio B/C: 0,8 <= B/C <= 1,2, preferably 0,9 <= B/C <= 1,1, more preferably 0,95 <= B/C <= 1,05.

3. Calender according to patent claim 1 or 2, **characterized in that** the adjusting direction (X) deviates from the direction of an axis (Z), which perpendicularly intersects the two roller axes (6, 12) in their centers, by 30° maximum, preferably 20° maximum, more preferably 10° maximum.

4. Calender according to any one of patent claims 1 to 3, **characterized in that** a device (25) is provided for limiting the pivoting of the rocker (11) about the rocker bearing axis (14) for predefining a minimum height (H) of the roller gap (14).

5. Calender according to patent claims 2 and 4,

**characterized in that** the device (25) is acting on the rocker (11) under a direction of action at a distance (D) from the rocker bearing axis (14), wherein, preferably, the following applies to the ratio between the distance (D) and the second distance (C): 0,5 <= D/C <0 1,5,
preferably 0,75 <= D/C <= 1,25 and the following preferably applies to an angle (($\beta$) between the adjusting direction (X) and the direction of action (Y): 0° <= ($\beta$) <= 30°, preferably <= 20°, more preferably <= 10°.

6. Calender according to any one of patent claims 1 to 5, **characterized in that** the length adjuster (15) has a pneumatically and/or hydraulically operable piston and cylinder arrangement (16).

7. Calender according to any one of patent claims 4 to 6, **characterized in that** the device (25) comprises a spindle jack (26), which is articulated to the calender frame (1) on one end and on the rocker (11) on the other end and by action of the piston and cylinder arrangement is subjected to tension.

8. Calender according to any one of patent claims 4 to 6, **characterized in that** the device (25) comprises means for adjusting the maximum stroke (H) of the length adjuster (15).

9. Calender according to patent claim 6 and 8, **characterized in that** the means comprise a stop (31) limiting the maximum stroke of the piston (32) of the piston and cylinder arrangement (16).

10. Calender according to any one of patent claims 1 to 9, **characterized in that** a device for detecting the height (H) of the roller gap (17) is provided, preferably comprising a distance measuring means (29), by means of which the distance of the first and second roller axis (6, 12) can be measured, wherein the distance measuring means (29) preferably comprises an inductive, optical or acoustic displacement sensor.

11. Calender according to patent claim 10 or 11, **characterized in that** the distance measuring means (29) comprises a guiding device (30) by means of which tilting of the distance measuring means (29) from a direction perpendicular to the roller axes (6, 12) is prevented, wherein the guiding device (30) is preferably guided over bearing assemblies (4, 9) of the first and second roller (2, 7).

12. Calender according to any one of patent claims 1 to 11, **characterized in that** the displacement device (21) comprises an eccentric arrangement (22) preferably comprising an eccentric component (23), which is rotatably mounted in the roller frame (1) or the rocker (11) about an axis approximately parallel to the first or second roller axis (6, 12) and can be fixed in an angular position.

**13.** Calender according to any one of patent claims 4 to 6, **characterized in that** the device (25) for limiting pivoting of the rocker (11) about the rocker bearing axis (14) is arranged between the bearing assembly (4) of the first roller (2) and the bearing assembly (9) of the second roller (7) and comprises a stop (37) limiting the minimum height (H) of the roller gap (17) by abutting against a stop surface (39).

**14.** Calender according to patent claim 13, **characterized in that** the stop (31) is formed by a spindle (36) of a spindle jack (33).

**15.** Calender according to patent claim 13 or 14, **characterized in that** the stop (37) comprises a contact surface, which is bent by a radius (R1) in the same direction to the surface of one of the first or second rollers (2, 7), and the stop surface (39) is bent by a radius (R2) in the same direction to the surface of the other of the first and second rollers (2, 7). wherein, preferably, the following applies to the radii R1 and R2:

$$R1 + R2 = \text{total of radius of the first and second rollers (2, 7)}$$
$$+/- 25\ \%, \text{ preferably } +/- 10\ \%.$$

**Revendications**

**1.** Calandre (100, 200, 300, 400, 500) pour le traitement par pression d'un matériau en bande (W),

avec un bâti de calandre (1),
avec un premier rouleau (2) comportant un premier axe du rouleau (6), avec un deuxième rouleau (7) comportant un deuxième axe du rouleau (12), dans lequel les rouleaux (2, 7) sont montés avec des agencements de support (4, 9) dans le bâti de calandre (1) et peuvent être mis en position l'un par rapport à l'autre dans lesquelles les premiers et deuxièmes axes du rouleau (6,12) sont parallèles les uns aux autres, et dans lequel au moins un des agencements de support (4, 9) de l'au moins un des rouleaux (2, 7) est formé de sorte que l'un des rouleaux (2, 7) peut être croisé d'un angle de croisement (Y) par rapport à l'autre des rouleaux (2, 7) autour d'un axe de croisement (20) coupant perpendiculairement le premier et le deuxième axe du rouleau (6, 12),
**caractérisé en ce**
**que** l'au moins un agencement de support comporte une bielle oscillante (11) avec une réception d'appui à rouleau (10), et
**que** la bielle oscillante (11) est monté dans un agencement de palier de bielle oscillante (13) de manière à pouvoir pivoter autour d'un axe de palier de bielle oscillante (14) à l'aide d'un dispositif de réglage de longueur (15) présentant une course maximale (H) et agissant dans une direction d'ajustement (X), et de manière à pouvoir être déplacé sur le bâti de calandre (1) avec une composante de direction perpendiculaire (R) à l'axe du rouleau (12) par rapport au bâti de calandre (1) à l'aide d'un dispositif de déplacement (21).

**2.** Calandre selon la revendication 1, **caractérisé en ce que** l'axe de rouleau (12) du rouleau (7) monté avec la réception d'appui à rouleau (10) comporte une première distance (B) à l'axe de palier de bielle oscillante (14) et le dispositif de réglage de longueur (15) est articulé à un point d'articulation (23) sur la bielle oscillante (11), qui comporte une deuxième distance (C) de l'axe de palier de bielle oscillante (14), dans lequel le rapport de distance B/C est comme suit : 0,8 < = B/C <= 1,2, de préférence 0,9 <= B/C <=1,1, particulièrement préférée 0,95 <= B/C <= 1,05.

**3.** Calandre selon la revendication 1 ou 2, **caractérisé en ce que** la direction d'ajustement s'écarte au maximum de 30°, de préférence au maximum de 20°, particulièrement préféré de 10° de la direction d'un axe (Z) qui coupe perpendiculairement les deux axes du rouleau (6,12) en leurs centres.

**4.** Calandre selon l'une quelconque des revendications 1 à 3, **caractérisé en ce qu'**il est prévu un dispositif (25) pour limiter le pivotement de la bielle oscillante (11) autour de l'axe de palier de bielle oscillante (14) afin de prédéfinir une hauteur minimale (H) de l'écartement des rouleaux (14).

**5.** Calandre selon l'une quelconque des revendications 2 et 4, **caractérisé en ce que** le dispositif (25) agisse sur la bielle oscillante (11) sous une direction d'action dans une distance (D) de l'axe de palier de bielle oscillante (14), dans lequel, de préférence, le rapport entre la distance (D) et la deuxième distance (C) est comme suit: 0,5 <= D/C <= 1,5, de préférence 0,75 <= D/C <= 1,25 et de préférence l'angle ((β) entre la direction d'ajustement (X) et la direction d'action (Y) est comme suit: 0° <= β <= 30°, de préférence <= 20°, particulièrement préféré <= 10°.

6. Calandre selon l'une quelconque des revendications 1 à 5, **caractérisé en ce que** le dispositif de réglage de longueur (15) comporte un agencement piston et cylindre (16) actionnable par système pneumatique et/ou hydraulique.

7. Calandre selon l'une quelconque des revendications 4 à 6, **caractérisé en ce que** le dispositif (25) comporte un vérin (26) qui est articulé au bâti de calandre (1) à une extrémité et à la bielle oscillante (11) à l'autre extrémité et par action de l'agencement piston et cylindre est sollicité en traction.

8. Calandre selon l'une quelconque des revendications 4 à 6, **caractérisé en ce que** le dispositif (25) comporte des moyens pour ajuster la course maximale (H) du dispositif de réglage de longueur (15).

9. Calandre selon la revendication 6 et 8, **caractérisé en ce que** les moyens comportent une butée limitant la course maximale (H) du piston (32) de l'agencement piston et cylindre (16).

10. Calandre selon l'une quelconque des revendications 1 à 9, **caractérisé en ce qu'**un dispositif (25) pour la détection de la hauteur (H) de l'écartement des rouleaux (17) est prévu comportant de préférence un dispositif de mesure de distance (29) par l'intermédiaire duquel on peut mesurer la distance entre le premier et le deuxième axe du rouleau (6,12), dans lequel le dispositif de mesure de distance (29) comporte un capteur de déplacement de préférence inductif, optique ou acoustique.

11. Calandre selon la revendication 10 ou 11, **caractérisé en ce que** le dispositif de mesure de distance (29) comporte un dispositif de guidage (30) à l'aide duquel on permet d'éviter un basculement du dispositif de mesure de distance (29) à partir d'une direction perpendiculaire aux axes des rouleaux (6, 12), dans lequel le dispositif de guidage (30), de préférence, est guidé par des agencements de support (4, 9) du premier et du deuxième rouleau (2, 7).

12. Calandre selon l'une quelconque des revendications 1 à 11,
**caractérisé en ce que** le dispositif de déplacement (21) comporte un dispositif excentrique (22) comportant, de préférence, un composant excentrique (23) qui est monté dans le bâti de rouleaux (1) ou dans la bielle oscillante (11) de manière à pouvoir tourner autour d'un axe à peu près parallèle au premier ou au deuxième axe du rouleau (6,12) et qui peut être fixé dans une position angulaire.

13. Calandre selon l'une quelconque des revendications 4 à 6,
**caractérisé en ce que** le dispositif (25) pour limiter le pivotement de la bielle oscillante (11) est agencé autour de l'axe de palier de bielle oscillante (14) entre l'agencement de support (4) du premier rouleau (2) et l'agencement de support (9) du deuxième rouleau (7), et comporte une butée (37) limitant la hauteur (H) minimum de l'écartement des rouleaux (17) en prenant appui sur une surface de butée (39).

14. Calandre selon la revendication 13, **caractérisé en ce que** la butée (37) est formée par une broche (36) d'un vérin (33).

15. Calandre selon la revendication 13 ou 14, **caractérisé en ce que** la butée (37) comporte une surface de contact qui est courbée par un rayon (R1) dans le même sens vers la surface de l'un des premiers ou deuxièmes rouleaux (2, 7) et la surface de butée (39) est courbée par un rayon (R2) dans le même sens vers la surface de l'autre des premiers et deuxièmes rouleaux (2, 7), dans lequel, de préférence, les rayons R1 et R2 sont comme suit:

R1 + R2= la somme du rayon des premiers et deuxièmes rouleaux (2, 7) +/- 25%, de préférence +/- 10 %.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1510215 B1